# EUROPÄISCHE PATENTSCHRIFT

(11) **EP 3 630 335 B1**
(45) Veröffentlichungstag und Bekanntmachung des Hinweises auf die Patenterteilung: **24.04.2024**
(21) Anmeldenummer: 18727764.5
(22) Anmeldetag: 24.05.2018
(51) Int. Cl.: B01D 39/16, B01D 39/18

(54) **FILTERMEDIUM, VERFAHREN ZU DESSEN HERSTELLUNG UND VERWENDUNG DES FILTERMEDIUMS IN EINEM FILTERELEMENT**
FILTER MEDIUM, METHOD FOR PRODUCING SAME, AND USE OF THE FILTER MEDIUM IN A FILTER ELEMENT
MILIEU FILTRANT, SON PROCÉDÉ DE FABRICATION ET SON UTILISATION DANS UN ÉLÉMENT FILTRANT

(30) Priorität: 24.05.2017 DE 102017004973
(43) Veröffentlichungstag der Anmeldung: 08.04.2020
(73) Patentinhaber: MANN+HUMMEL GmbH, 71636 Ludwigsburg (DE)
(72) Erfinder: POLJAK, Ivanka, 41720 Göteborg (SE); BATT, Till, 8044 Zürich (CH); PFANNKUCH, Steffen, 71636 Ludwigsburg (DE); MÜLLER, Thilo, 76189 Karlsruhe (DE); KORONAI, Anja, 78467 Konstanz (DE)
(74) Vertreter: Mann + Hummel Intellectual Property
(86) Internationale Anmeldenummer: PCT/EP2018/063590
(87) Internationale Veröffentlichungsnummer: WO 2018/215574

(56) Entgegenhaltungen:
- EP-A1- 1 050 331
- EP-B1- 1 050 331
- WO-A1-2008/078858
- US-A1- 2016 129 381
- US-A1- 2017 312 673

## Beschreibung

### Technisches Gebiet

Die Erfindung betrifft ein Filtermedium nach dem Oberbegriff des Anspruchs 1, und eine Verwendung dieses Filtermediums.

Der marktübliche Standard sind heute überwiegend auf Zellulosefaser basierende Filtermedien, im Weiteren Filterpapier genannt. Gegenüber diesen Medien bietet die Verwendung eines Filtermediums im Sinne der Erfindung deutliche Leistungsverbesserung.

### Stand der Technik

Die WO 2008 078 858 A1 offenbart ein zwei- oder mehrlagiges Filtermedium zur Filtration einer Luftströmung mit einer Spinnvlieslage, welche anströmseitig zu einer Papierlage angeordnet ist. Gegenüber Filterpapier bietet dieses jedoch keine ausreichende Leistungsverbesserung.

Dokument EP1050331A1 offenbart ein zwei- oder mehrlagiges Filtermedium zur Filtration einer Luftströmung mit einer Melt-blownlage, welche anströmseitig zu einer Filterpapierlage angeordnet ist.

### Offenbarung der Erfindung

Daher ist es die Aufgabe der vorliegenden Erfindung ausgehend vom vorgenannten Stand der Technik, ein Filtermedium bereitzustellen, bei welchem abgeschiedener Staub gleichmäßig auf der Filterlage verteilt wird und eine gute Abscheideeffizienz bei guter Luftdurchlässigkeit erreicht wird.

Diese Aufgabe wird durch ein Filtermedium mit den Merkmalen des Anspruchs 1 gelöst. Ein erfindungsgemäßes Filtermedium umfasst eine Krempelvlieslage und eine abströmseitig dazu angeordnete Filterpapierlage als benachbarte Filterlage, wobei die Krempelvlieslage eine höhere Luftdurchlässigkeit aufweist als die Filterpapierlage. Die Krempelvlieslage ist dabei vorzugsweise geringer verdichtet als die Filterpapierlage oder eine Spinnvlieslage. Daher wird die Staubaufnahmekapazität des Filtermediums erhöht und der Druckverlust bei Durchströmung des Filtermediums mit dem zu filternden gasförmigen Medium, z. B. Luft, vermindert.

Bei der Filtration staubbeladener Luft kann der in der offenporigen Krempelvlieslage abgeschiedene Staub besonders gleichmäßig verteilt werden.

Durch diese Tiefenfiltration kann bei vergleichbarem Abscheidegrad (im Sinne der ISO 5011 in der Fassung z. Z. der Erstanmeldung der vorliegenden Erfindung) eine höhere Staubaufnahmekapazität des Filtermediums erzielt werden im Vergleich zu herkömmlichen, einlagigen Filterpapieren sowie im Vergleich zu kombinierten herkömmlichen Filtermedien, bestehend aus einem einlagigen Filterpapier und einem einlagigen Spinnvlies (Meltblown oder Spunbond). Gleichzeitig ist die Luftdurchlässigkeit eines erfindungsgemäßen Filtermediums größer gegenüber einem einlagigen Papierfiltermedium mit vergleichbarem Abscheidegrad.

Weitere vorteilhafte Ausgestaltungen der Erfindung sind Gegenstand der Unteransprüche.

Die Luftdurchlässigkeit der Krempelvlieslage, gemessen gemäß DIN EN ISO 9237 bei einem Differenzdruck von 200 Pa, beträgt mehr als 800 l/m²/s. In einer besonders bevorzugten Ausführungsvariante der Erfindung beträgt die Luftdurchlässigkeit der Krempelvlieslage nach den oben genannten Messbedingungen 1600 bis 6000 l/m²/s. Die Filterpapierlage kann vorteilhaft nach den oben genannten Messbedingungen eine Luftdurchlässigkeit von weniger als 800 l/m²/s aufweisen.

Die Fasern der Krempelvlieslage weisen eine durchschnittliche Faserfeinheit (im Sinne der ISO 1144 bzw. DIN 60905, in der Fassung z. Z. der Erstanmeldung der vorliegenden Erfindung) im Bereich von 1 bis 30 Dezitex auf. Diese bevorzugte Faserfeinheit ermöglicht eine besonders effektive Partikelabscheidung aus einem gasförmigen Medium bei gleichzeitig guten mechanischen Eigenschaften der Krempelvlieslage.

In einer bevorzugten Ausführungsform kann das Krempelvlies eine Mischung von zumindest zwei Fasertypen mit unterschiedlicher Faserfeinheit aufweisen. In einer bevorzugten Ausführung weist die Krempelvlieslage einen Feinfaseranteil von mindestens 10% massenbezogen auf, bestehend aus Fasern von 0,7 - 4 Dezitex Feinheit sowie einen Grobfaseranteil von mindestens 10% massenbezogen, bestehend aus Fasern von 3 - 10 Dezitex Feinheit. Gegenüber der Verwendung einer Kombination eines einlagigen Papiers mit einem Spinnvlies (Meltblown oder Spunbond) (im Sinne von z. B. US6315805) bietet diese vorteilhafte Zusammensetzung des Krempelvlieses insbesondere durch die erreichbaren Faserfeinheiten und Kräuselungsgrade bzw. deren Wählbarkeit und Mischbarkeit und die derart einstellbare Packungsdichte (Verhältnis der Dichte zum Flächengewicht) eine besonders effektive Partikelabscheidung aus einem gasförmigen Fluid bei gleichzeitig guten mechanischen Eigenschaften der Krempelvlieslage. Die Verwendung eines Krempelvlieses hat dabei den Vorteil, dass bei einem Krempelvlies beispielsweise im Vergleich zu einem Meltblown ohne prozesstechnischen Mehraufwand Fasermischungen aus unterschiedlich dicken Fasern verwendet werden können.

Das mittlere Flächengewicht der Krempelvlieslage beträgt von 10 bis 120 g/m², besonders bevorzugt 35 bis 100 g/m². Die Kombination der vorgenannten Faserfeinheit und des Flächengewichtes beschreibt ein optimiertes Verhältnis zwischen Filtrationsleistung und hinreichender Permeabilität des Filtermaterials. Dies erlaubt hohe Staubaufnahmekapazitäten des erfindungsgemäßen Filtermediums bei gleichzeitig hoher Luftdurchlässigkeit. Eine entsprechende Flächengewichtsbestimmung kann nach der DIN EN ISO 9237, in der Fassung z. Z. der Erstanmeldung der vorliegenden Erfindung, erfolgen.

Unter der Packungsdichte versteht man im Folgenden den volumenbezogenen Feststoffanteil des Filtermediums. Die verwendete Krempelvlieslage liegt in einem Bereich der Packungsdichte zwischen 1 bis 10 %, bevorzugt im Bereich 2 bis 7 %.

Die Filterpapierlage kann bevorzugt eine nassgelegte Zellulosefaserlage sein. Die Zellulosefaserlage kann dabei im Rahmen der vorliegenden Erfindung bis zu 30 Massenprozent synthetische Fasern enthalten. Die Filterpapierlage ermöglicht einerseits eine Feinfiltration und verleiht dem Filtermedium zudem eine vorteilhaft hohe mechanische Steifigkeit.

Eine Imprägnierung kann das Ablösen der Fasern aus der Filterpapierlage verhindern und sorgt für gute Resistenz des Materials gegenüber Wasser und anderen flüssigen Kontaktstoffen. Die Packungsdichte der imprägnierten Filterpapierlage ist bevorzugt größer als 10 % und kleiner als 30 %. Hierdurch wird zusätzlich eine gewünschte Resistenz gegenüber Wasser (Wasserbeständigkeit) und gleichzeitig eine ausreichende Steifigkeit und Verarbeitbarkeit auf Rotationsfaltmaschinen erreicht. Wasserbeständigkeit im Sinne dieser Anmeldung wird gemessen am Wasseraufnahmevermögen gemäß DIN EN ISO 535 in der Fassung z. Z. der Erstanmeldung der vorliegenden Erfindung, wobei wasserbeständig im Sinne dieser Anmeldung ein Wasseraufnahmevermögen gemäß Cobb60 der DIN EN ISO 535 unter 20 g/m² bei 20 °C und Standarddruck bedeutet. Das erfindungsgemäße Filtermedium kann vorteilhaft flammhemmende Eigenschaften aufweisen. Dadurch wird die Sicherheit bei Einsatz des Filtermediums in einer Reihe von Anwendungsfällen zusätzlich erhöht. Zu diesem Zweck kann die Filterpapierlage vorteilhaft eine flammhemmende Imprägnierung aufweisen. Das bevorzugt in der Imprägnierung vorgesehene bzw. enthaltene Flammschutzmittel kann in einer besonders bevorzugten Ausführungsvariante ein phosphorbasiertes Flammschutzmittel sein.

Die Konzentration und die Art des Flammschutzmittels ist vorzugsweise derart zu wählen, dass die Filterpapierlage (3) flammhemmende Eigenschaften nach der Flammschutzklasse F1 gemäß der DIN 53 438 - 3), in der Fassung z. Z. der Erstanmeldung der vorliegenden Erfindung, aufweist.

In der Krempelvlieslage sind in einer bevorzugten, insbesondere für die Luftfiltration von Brennkraftmaschinen geeigneten Ausführungsform, zumindest 80 % der Fasern polyesterhaltig. Es kann sich dabei sowohl um Polyesterfasern als auch um Polyestercopolymer-Fasern handeln. Diese Materialien sind vorteilhaft, da sie besonders temperaturbeständig sind. Die Polyestercopolymer-Fasern können insbesondere eine Kern-Mantel-Struktur aufweisen, z. B. mit herkömmlichen Polyestermaterialien als Kern, die von einer Hülle aus Polyestercopolymer umgeben sind. Bei der Herstellung der Krempelvlieslage können mechanische und thermische Verfestigungsmethoden wie Vernadelung und Thermofusionierung eingesetzt werden.

Die Fasern der Krempelvlieslage, insbesondere die polyesterhaltigen Fasern, können vorteilhaft mechanisch z. B. unter Einwirkung von Druck und/oder thermisch miteinander verfestigt werden. Dies kann vorteilhaft über Lamination der Lagen, vorzugsweise unter Einwirkung von Druck und Temperatur, insbesondere durch Thermo/Druck-Kalandrierung erfolgen. Eine weitere bevorzugte Ausführungsvariante zur alternativen oder zusätzlichen Verbindung beider Lagen ist das Ultraschall-Schweißen.

Alternativ oder zusätzlich können beide Filterlagen, also die Krempelvlieslage und die Filterpapierlage, auch verklebt werden. Die Verbindung erfolgt in dieser Variante dann vorteilhaft mittels einer adhäsiven mittleren Schicht, beispielsweise sind geeignete adhäsive Schichten Schmelzkleber (Hotmelt-Kleber) oder reaktive Polyurethankleber.

Die Erfindung umfasst zudem ein Filterelement mit einem gefalteten erfindungsgemäßen Filtermedium nach einem der Ansprüche 1 bis 8. Das Filtermedium ist faltbar und kann daher zu einem Faltenbalg weiterverarbeitet werden. Die Falten des Filterelements, insbesondere des Faltenbalgs, weisen Faltenabstände von mehr als 3,5 mm, insbesondere 4 bis 8 mm, auf.

Die Faltenhöhe des Filtermediums beträgt zwischen 10 und 60 mm. Der Faltenabstand eines Faltenbalgs aus konventionellem Filterpapier beträgt meist 3,5 mm oder weniger. Die Falten des Filtermediums können Stirnkanten aufweisen. Diese sind endständig an den Falten angeordnet. Alternativ oder ergänzend zu den oben genannten Laminationsmethoden können Krempelvlieslage und Papierlage bei der Anfertigung des Filterbalges verbunden werden. Hierzu kann der in gebräuchlichen Filterelementen zur Dichtung der Stirnkanten aufgebrachte Kleber / adhäsiver Schicht genutzt werden.

Ein Verfahren (nicht Erfindungsgemäß) zur Herstellung eines Filterelements umfasst die folgenden Schritte:
I Bereitstellen einer Krempelvlieslage, insbesondere zur Filtration eines gasförmigen Mediums;
II Bereitstellen einer abströmseitig zur Krempelvlieslage angeordneten Filterpapierlage als benachbarte Filterlage, wobei die Filterpapierlage eine geringere Luftdurchlässigkeit aufweist als die Krempelvlieslage;
III Verbinden zumindest der Krempelvlieslage und der Filterpapierlage zu einem Filtermedium; und
IV Bereitstellen eines Filterelements mit dem Filtermedium, wobei das Bereitstellen zumindest ein Umformen des Filtermediums, vorzugsweise zumindest ein Falten des Filtermediums zu einem Faltenbalg, umfasst.

Ein Verbinden der Filterpapierlage mit der Krempelvlieslage kann auch während der Produktion des Faltenbalges erfolgen. Hierfür können vorteilhaft die zur Abdichtung und Stabilisierung des Faltenbalges vorgesehenen Klebespuren bzw. Kleberaupen genutzt werden, die vor dem Aufstellen der Falten auf einer der beiden Filterlagen aufgebracht werden.

Die Verwendung des erfindungsgemäßen Filtermediums gemäß einem der Ansprüche 1 bis 8 und/oder des erfindungsgemäßen Filterelements gemäß Anspruch 9 oder 10 betrifft die Filtration der Ansaugluft vor deren Einleitung in eine Verbrennungskraftmaschine.

Durch den vorgenannten erhöhten Faltenabstand gegenüber konventionellen Papierfilterelementen weist ein Filterelement aus dem erfindungsgemäßen Filtermedium zusätzlich vorteilhaft bei kleinerer Filterfläche als ein konventionelles Element aus Filterpapier, bei Einsatz in der Luftfiltration gegenüber dem konventionellen Element aus Filterpapier bessere Leistungsdaten auf, insbesondere bei Prüfungen gemäß ISO 5011.

### Kurze Beschreibung der Zeichnungen

Nachfolgend wird die Erfindung anhand von Ausführungsbeispielen und anhand von Figuren näher erläutert. Die Ausführungsbeispiele sind lediglich beispielhaft zu verstehen und in keiner Weise beschränkend für den Gegenstand der Erfindung. Es zeigen:
- Fig. 1:: Schematische Darstellung eines erfindungsgemäßen Filtermediums 1, bestehend aus einer Krempelvlieslage 2 und einer Filterpapierlage 3;
- Fig. 2:: Seitliche Ansicht eines gefalteten erfindungsgemäßen Filtermediums;
- Fig. 3:: Schematische Darstellung eines erfindungsgemäßen Filtermediums 1, bestehend aus einer Krempelvlieslage 2 und einer Filterpapierlage 3, die über verschiedene Laminationsarten miteinander verbunden sind; und
- Fig. 4:: Graphische Darstellung des Druckabfalls gegenüber der Staubaufnahmekapazität des Filtermediums in Gegenüberstellung zu einem Vergleichsfiltermedium.

### Ausführungsform(en) der Erfindung

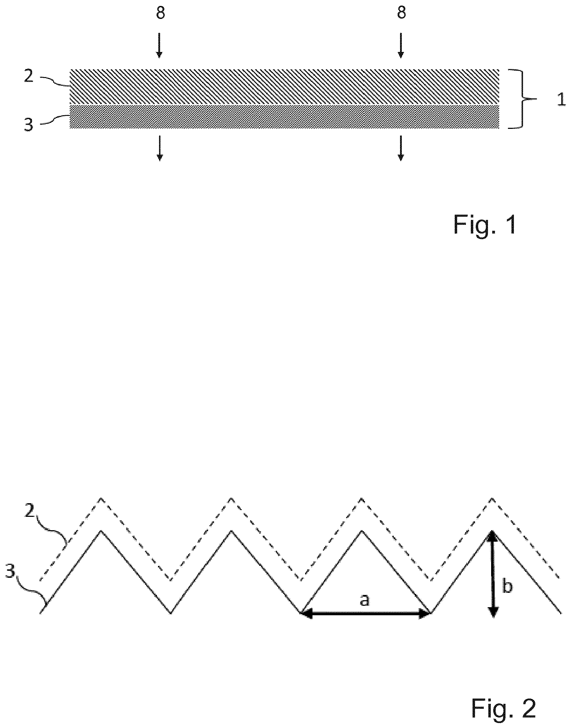

Fig. 1 und 2 zeigt ein Ausführungsbeispiel eines erfindungsgemäßen Filtermediums 1 mit einer anströmseitig angeordneten Vlieslage aus Synthetikfasern, die in Form einer Krempelvlieslage 2 ausgebildet ist und einer abströmseitig angeordneten Filterpapierlage 3, beispielsweise einer imprägnierten Filterpapierlage.

Die Fasern der Filterpapierlage 3 sind dichter zueinander angeordnet und damit höher abscheidend ausgebildet als die Fasern der Krempelvlieslage 2.

Die abströmseitig angeordnete Filterpapierlage 3 ist wasserbeständig (gemessen am Wasseraufnahmevermögen gemäß DIN EN ISO 535, wobei wasserbeständig im Sinne dieser Anmeldung ein Wasseraufnahmevermögen gemäß Cobb60 der DIN EN ISO 535 unter 20 g/m² bei 20 °C und Standarddruck bedeutet) und bevorzugt flammhemmend ausgerüstet. Die Strömungsrichtung 8 ist in Fig. 1 bis 4 durch Pfeile dargestellt

Die Zellulosefasern sind bei der Herstellung der Filterpapierlage 3 vorzugsweise nass abgelegt.

Die Krempelvlieslage 2 kann zumindest zu 80 Gewichtsprozent (Gew.%) aus Polyester gebildet sein. Diese Fasersorte hat sich als besonders temperaturbeständig erwiesen und ist daher bevorzugt. Die verbleibenden 20 Gew% derartiger Fasersorten können beispielsweise Bi-Komponentenfasern mit einem Polyesterkern und einem Co-Polyestermantel sein.

Die Feinheit der Fasern der Krempelvlieslage 2 beträgt zwischen 1 bis 30 Dezitex (Dezitex), vorzugsweise 3 bis 15 Dezitex.

Der mittlere Faserdurchmesser der Fasern der Krempelvlieslage kann vorzugsweise größer sein als 10 µm. Die Luftdurchlässigkeit der Krempelvlieslage 2 beträgt gemäß EN ISO 9237 vorzugsweise 1600 - 6000 l/(m²*s) bei einer Druckdifferenz von 200 Pa. Das verwendete Messgerät muss den Anforderungen der o. g. Norm entsprechen.

In einer besonders bevorzugten Variante kann die Krempelvlieslage 2 aus Fasern eines Polyesters bestehen oder zu mehr als 80 Massenprozent derartige Fasern umfassen. In einer weiteren bevorzugten Variante können zumindest 10 Massenprozent der Fasern der Krempelvlieslage 2 aus Bikomponentenfasern oder so genannten Kern-MantelFasern bestehen, die Anteile eines Polyestercopolymers enthalten. Dabei kann besonders bevorzugt das Kernmaterial aus einem reinen Polyestermaterial bestehen und die Mantelfasern aus einem Polyestercopolymer, insbesondere aus einem Co-Polyester mit geringerer Schmelztemperatur als Polyester.

Alternativ oder zusätzlich zu einem Polyestermaterial kann auch Polypropylen als Fasermaterial für die Fasern der Krempelvlieslage 2 genutzt werden. Die durchschnittliche Faserlänge der Fasern der Krempelvlieslage 2 kann zwischen beispielsweise 20 bis 100 mm, vorzugsweise zwischen 50 und 60 mm betragen.

Zum Einsatz in einem nicht näher dargestellten Filterelement wird das Filtermedium zu einem sogenannten Faltenbalg gefaltet, welcher abschnittsweise in Fig. 2 dargestellt ist. Ein entsprechendes Filterelement mit einem als Faltenbalg ausgestalteten Filtermedium ist beispielsweise aus der DE 10 2012 25 019 862 A1 bekannt.

Der Faltenabstand (a) des gefalteten Filtermediums 1 beträgt größer als 3,5 mm, besonders bevorzugt zwischen 4 bis 8 mm. Die Faltenhöhe (b) des gefalteten Filtermediums 1 beträgt zwischen 10 bis 60 mm.

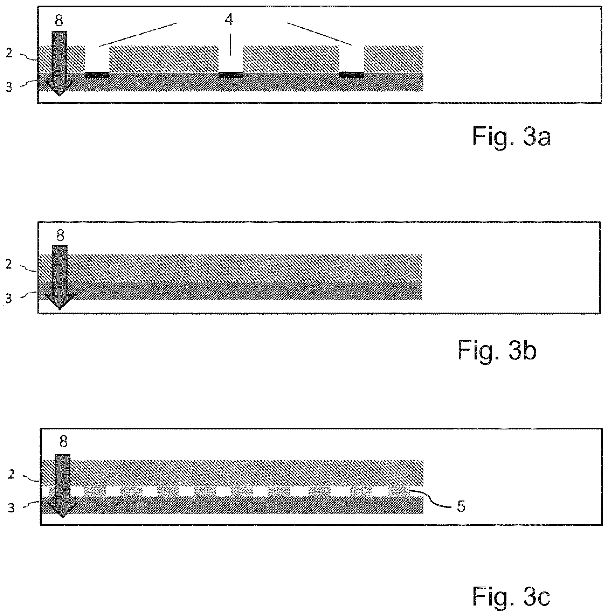

Die Lagen des Filtermediums können entsprechend Fig. 3a bis 3c durch Lamination miteinander verbunden sein. Dabei wird die Verbindung zwischen den Lagen 2 und 3 beispielsweise durch einen Klebstoff 5 hergestellt. Dieser kann bevorzugt in Form einer adhäsiven Lage (Vliesstoff) oder eines adhäsiven Pulvers vorliegen oder durch einen Sprühauftrag als unterbrochener Film ausgeführt sein. Die Verbindung mittels Klebstoff ist in Fig. 3c dargestellt.

Alternative Arten der Lamination bieten die Thermofusion oder Thermokalandrierung, also eine Verbindung der Lagen mittels Temperatur und/oder durch erhöhten Druck. Dies ist in Fig. 3b dargestellt. Eine weitere optionale Möglichkeit besteht in einer lokalen (unterbrochenen) Verbindung der Lagen durch Ultraschallschweißen. Dies ist in Fig. 3a dargestellt, in welcher das Filtermedium Schweißpunkte 4 aufweist, die z. B. durch Ultraschallschweißen oder Thermokalandrierung ins Filtermaterial eingebracht sind. Selbstverständlich können auch einzelne Verfahren bzw. Verfahrensschritte, welche in Fig. 3a bis 3c dargestellt sind, miteinander kombiniert werden.

Eine weitere optionale Verbindungsmöglichkeit ergibt sich bei der Herstellung von Faltenbälgen aus dem Filtermedium. Hierzu werden die Lagen 2 und 3 separat einer Faltmaschine zugeführt. Die Verbindung der Lagen kann dann bevorzugt durch die Stirnkanten-Verklebung des Faltenbalgs erfolgen, d. h. eine entlang der Stirnkanten aufgebrachte Klebstoffspur, die die Falten zusammenhält und eine Trennung zwischen Roh- und Reinseite im Bereich der Faltentaschen bzw. der durch die zickzackförmig verlaufenden Stirnkanten gebildeten Stirnseiten bewirkt. Zudem können im Fall der losen Lagen im Prozess, vor dem Faltprozess aufgebrachte Klebespuren oder auch Kleberaupen den Lagenzusammenhalt gewährleisten.

Das Filtermedium 1 weist bevorzugt maximal drei Filterlagen auf, also zusätzlich zur Krempelvlieslage 2 und der Filterpapierlage 3 noch eine weitere Filterlage. Eine oder zwei optionale Klebstofflagen, welche die drei Filterlagen miteinander verbinden, können ebenfalls vorgesehen sein. Die Anordnung aus maximal drei Filterlagen begünstigt eine kostengünstige Herstellung durch eine prozesssichere, stabile Faltbarkeit des Filtermediums. Dabei ist die Filterpapierlage 3 stets eine zur Krempelvlieslage 2 benachbarte Filterlage.

Es ist jedoch im Rahmen der vorliegenden Erfindung möglich, dass zwei unterschiedlich feine Krempelvlieslagen vorgesehen sind, wobei eine erste dieser beiden Lagen die Krempelvlieslage 2 ist und die darüber angeordnete zweite Krempelvlieslage anströmseitig zur Krempelvlieslage 2 angeordnet ist. Es ist ebenfalls im Rahmen der vorliegenden Erfindung möglich, dass die Filterpapierlage 3 einen Gradienten bezüglich der Faserdichte und/oder des mittleren Faserdurchmessers in Durchströmungsrichtung, die in Fig. 1 mit einem Pfeil angedeutet ist, aufweist. Vorzugsweise ist dabei die Abströmseite des Filtermediums stärker verdichtet und besteht im Mittel aus feineren Fasern als die Anströmseite.

Zur zusätzlichen Erhöhung der mechanischen Festigkeit und Steifigkeit können einzelne Filterlagen vernadelt, imprägniert oder thermisch gebunden sein.

Das erfindungsgemäße Filtermedium 1 wird bevorzugt in Luftfilterelementen eingesetzt. Eine Anwendung ist dabei die Filtration der zur Verbrennung benötigten Ansaugluft vor deren Einleitung in eine Verbrennungskraftmaschine, zum Beispiel von Kraftfahrzeugen und Krafträdern.

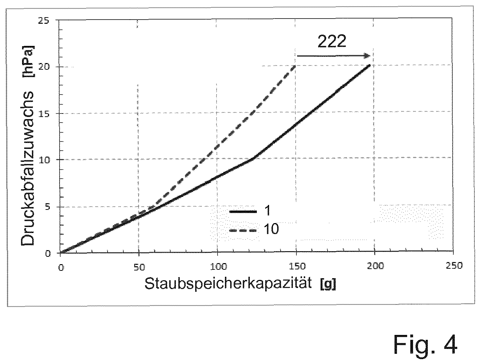

Das in Fig. 4 dargestellte Schaubild veranschaulicht den Zuwachs der Staubaufnahmekapazität bzw. Staubspeicherkapazität eines Filterelementes bestehend aus gefaltetem Filtermedium des erfindungsgemäßen Filtermediums 1 im Vergleich zu einem konventionellen Papierelement (einlagiges Zellulosepapier), dessen Falten nur aus Filterpapier hergestellt sind. Diese wurde einem zunehmenden Druckabfall gegenübergestellt. Gegenüber diesem Vergleichsmedium bietet die Verwendung eines Filtermediums im Sinne der Erfindung deutliche Leistungsverbesserung. Die Staubaufnahmekapazität des erfindungsgemäßen Filtermediums 1 ist bei gleichem Abscheidegrad gegenüber der Staubkapazität des einlagigen Zellulosepapiers deutlich erhöht (siehe Tabelle 1). Durch die Verbindung der beiden vorgenannten Lagen erfolgt eine Optimierung der Filtrationsleistung (Staubaufnahmekapazität und/oder Abscheidegrad). Die Zunahme der Staubaufnahmekapazität stellt sich im Verlaufe einer kontinuierlichen Staubzugabe und der dadurch herbeigeführten Druckverlustzunahme des jeweiligen Filterelementes 1 oder 10 ein. Diese wird nach dem in der ISO 5011 in der Fassung z. Z. der Erstanmeldung der vorliegenden Erfindung beschriebenen Verfahren ermittelt. Verwendet wurde ein Teststaub gemäß der ISO 12103-A2 in der Fassung z. Z. der Erstanmeldung der vorliegenden Erfindung. Der Massenstrom des staubbeladenen Teststromes betrug 750 kg/h. Durch Verwendung des erfindungsgemäßen Filtermediums kann im Vergleich zu einem vergleichbar dicken Filterpapier oder einer Kombination aus Filterpapier und einer Spunbondlage Material eingespart werden. Auch der Druckverlust ist durch Einsatz des erfindungsgemäßen Filtermediums deutlich reduziert, was weitere Vorteile in bestimmten Anwendungsgebieten hat.

| Tabelle 1 | **ISO 5011 Bestaubungsprüfung** | | |
|---|---|---|---|
| | **Luftmassenstrom 750 kg/h** | | |
| | **Prüfstaub ISO 12103-1 A2** | | |
| | **Enddruckverlustanstieg 20 mbar** | | |
| **Filtermaterial** | **Anfangsabscheide-grad [%]** | **Endabscheide-grad [%]** | **Staubkapazität [g]** |
| Einlagiges Papiermedium (einlagiges Zellulosepapier) | 99,2 | 99,6 | 150 |
| erfindungsgemäßen Filtermediums 1 (Krempelvlieslage 2 und abströmseitig dazu angeordnete Filterpapierlage 3) | 99,2 | 99,6 | 197 |

## Patentansprüche

1. Filtermedium (1), insbesondere zur Filtration eines gasförmigen Mediums, umfassend eine offenporige Krempelvlieslage (2) und eine abströmseitig dazu angeordnete Filterpapierlage (3) als benachbarte Filterlage, wobei die Krempelvlieslage (2) eine höhere Luftdurchlässigkeit aufweist als die Filterpapierlage (3) und wobei die Luftdurchlässigkeit der Krempelvlieslage (2), gemessen gemäß DIN EN ISO 9237 bei einem Differenzdruck von 200 Pa, mehr als 800 l/m²/s beträgt, insbesondere 1600 bis 6000 l/m²/s beträgt, und wobei die Krempelvlieslage (2) eine durchschnittliche Feinheit der Fasern im Bereich von 1 bis 30 Dezitex aufweist, und wobei das mittlere Flächengewicht der Krempelvlieslage (2) gemessen gemäß DIN EN 29073-1 zwischen 10 bis 120 g/m² liegt.

2. Filtermedium nach Anspruch 1, **dadurch gekenn-zeichnet, dass** die Filterpapierlage (3) eine nassgelegte Zellulosefaserlage umfasst.

3. Filtermedium nach Anspruch 2, **dadurch gekennzeichnet, dass** die Zellulosefaserlage bis zu 30 Massenprozent synthetische Fasern aufweist.

4. Filtermedium nach einem der vorhergehenden Ansprüche, **dadurch gekennzeichnet, dass** zumindest die Filterpapierlage (3), bevorzugt auch die Krempelvlieslage (2) und weiter bevorzugt alle Lagen des Filtermediums, eine Imprägnierung aufweisen, insbesondere zur Festigung und Bindung der Zellulosefasern.

5. Filtermedium nach Anspruch 4, **dadurch gekennzeichnet, dass** die Imprägnierung eine flammhemmende Imprägnierung ist, wobei die Imprägnierung insbesondere ein Flammschutzmittel, bevorzugt ein phosphorbasiertes Flammschutzmittel, aufweist, wobei das Flammschutzmittel und dessen Konzentration vorzugsweise derart gewählt sind, dass die Filterpapierlage (3) und/oder die Krempelvlieslage (2) und oder das Filtermedium (1) flammhemmende Eigenschaften gemäß der Flammschutzklasse F1 gemäß DIN 53 438 - 3 aufweist.

6. Filtermedium nach einem der vorhergehenden Ansprüche, **dadurch gekennzeichnet, dass** zumindest 80 Massenprozent der Fasern in der Krempelvlieslage (2) polyesterhaltig sind.

7. Filtermedium nach einem der vorhergehenden Ansprüche, **dadurch gekennzeichnet, dass** die Filterpapierlage (3) und die Krempelvlieslage (2) über Lamination der Lagen, vorzugsweise unter Einwirkung von Druck und Temperatur, insbesondere durch Thermo/Druck-Kalandrierung miteinander verbunden sind.

8. Filtermedium nach einem der vorhergehenden Ansprüche, **dadurch gekennzeichnet, dass** die Filterpapierlage (3) und die Krempelvlieslage (2) miteinander verbunden sind, insbesondere durch eine adhäsive mittlere Schicht.

9. Filterelement mit einem gefalteten Filtermedium (1) nach einem der vorhergehenden Ansprüche, **dadurch gekennzeichnet, dass** der Faltenabstand des gefalteten Filtermediums (1) mehr als 3,5 mm, vorzugsweise 4 bis 8 mm, beträgt und dass die Faltenhöhe des Filtermediums (1) zwischen 10 bis 60 mm beträgt.

10. Filterelement nach Anspruch 9, **dadurch gekennzeichnet, dass** die Falten des Filtermediums Stirnkanten aufweisen, wobei die Verbindung der Lagen des Filtermediums (1) durch eine Verklebung entlang der Stirnkanten erfolgt, insbesondere mittels insbesondere durchgehender Klebstoffspuren, insbesondere aus Schmelzklebstoff.

11. Verwendung des Filtermediums (1) gemäß einem der Ansprüche 1 bis 8 und/oder eines Filterelements gemäß Anspruch 9 oder 10 zur Filtration von angesaugter Luft vor deren Einleitung in eine Verbrennungskraftmaschine.

## Claims

1. A filter medium (1), in particular for filtering a gaseous medium, comprising an open-pore card web layer (2) and a filter paper layer (3) arranged on the downstream side thereof as an adjacent filter layer, wherein the card web layer (2) features a higher air permeability than the filter paper layer (3) and wherein the air permeability of the card web layer (2), measured according to DIN EN ISO 9237 at a differential pressure of 200 Pa, is greater than 800 l/m²/s, in particular 1600 to 6000 l/m²/s, and wherein the card web layer (2) features an average fineness of the fibers between 1 to 30 decitex, and wherein the average grammage of the card web layer (2), measured according to DIN EN 29073-1, is between 10 and 120 g/m².

2. The filter medium according to claim 1, **characterized in that** the filter paper layer (3) comprises a wet-laid cellulose fiber layer.

3. The filter medium according to claim 2, **characterized in that** the cellulose fiber layer features up to 30 mass percent of synthetic fibers.

4. The filter medium according to one of the preceding claims, **characterized in that** at least the filter paper layer (3), preferably also the card web layer (2) and more preferably all layers of the filter medium, feature an impregnation, in particular for strengthening and binding the cellulose fibers.

5. The filter medium according to claim 4, **characterized in that** the impregnation is a flame-retardant impregnation, wherein the impregnation features in particular a flame retardant, preferably a phosphorus-based flame retardant, wherein the flame retardant and its concentration are preferably selected in such a way that the filter paper layer (3) and/or the card web layer (2) and/or the filter medium (1) feature flame-retardant properties in accordance with flame retardancy class F1 according to DIN 53 438 - 3.

6. The filter medium according to one of the preceding claims, **characterized in that** at least 80 mass percent of the fibers in the card web layer (2) contain polyester.

7. The filter medium according to one of the preceding claims, **characterized in that** the filter paper layer (3) and the card web layer (2) are connected to one another via lamination of the layers, preferably under the action of pressure and temperature, in particular through thermal/pressure calendering.

8. The filter medium according to one of the preceding claims, **characterized in that** the filter paper layer (3) and the card web layer (2) are connected to one another, in particular through an adhesive central layer.

9. A filter element having a folded filter medium (1) according to one of the preceding claims, **characterized in that** the fold distance of the folded filter medium (1) is greater than 3.5 mm, preferably 4 to 8 mm, and **in that** the fold height of the filter medium (1) is between 10 and 60 mm.

10. The filter element according to claim 9, **characterized in that** the folds of the filter medium feature front edges, wherein the connection of the layers of the filter medium (1) is made by bonding along the front edges, in particular using in particular continuous adhesive lines, in particular through hot-melt adhesive.

11. A use of the filter medium (1) according to one of the claims 1 to 8 and/or a filter element according to claim 9 or 10 for filtering aspirated air before it is introduced into an internal combustion engine.

## Revendications

1. Milieu filtrant (1), notamment pour filtrer un milieu gazeux, comprenant une couche de voile de carde (2) à pores ouverts et une couche de papier filtrant (3) disposée du côté aval de celle-ci en tant que couche filtrante voisine, la couche de voile de carde (2) présentant une perméabilité à l'air plus élevée que la couche de papier filtrant (3) et la perméabilité à l'air de la couche de voile de carde (2), mesurée selon DIN EN ISO 9237 à une pression différentielle de 200 Pa, étant supérieure à 800 l/m²/s, notamment comprise entre 1600 et 6000 l/m²/s, et la couche de voile de carde (2) présentant une finesse moyenne des fibres comprise entre 1 et 30 décitex, et le grammage moyen de la couche de voile de carde (2), mesuré selon DIN EN 29073-1, étant compris entre 10 et 120 g/m².

2. Milieu filtrant selon la revendication 1, **caractérisé en ce que** la couche de papier filtrant (3) comprend une couche de fibres cellulosiques déposée par voie humide.

3. Milieu filtrant selon la revendication 2, **caractérisé en ce que** la couche de fibres cellulosiques présente jusqu'à 30 pour cent en masse de fibres synthétiques.

4. Milieu filtrant selon l'une quelconque des revendications précédentes, **caractérisé en ce qu'**au moins la couche de papier filtrant (3), de préférence également la couche de voile de carde (2) et plus préférentiellement toutes les couches du milieu filtrant, présentent une imprégnation, notamment pour consolider et lier les fibres de cellulose.

5. Milieu filtrant selon la revendication 4, **caractérisé en ce que** l'imprégnation est une imprégnation ignifuge, l'imprégnation présentant notamment un agent ignifuge, de préférence un agent ignifuge à base de phosphore, l'agent ignifuge et sa concentration étant de préférence choisis de sorte que la couche de papier filtrant (3) et/ou la couche de voile de carde (2) et/ou le milieu filtrant (1) présente des propriétés ignifuges selon la classe d'ignifugation F1 selon DIN 53 438 - 3.

6. Milieu filtrant selon l'une quelconque des revendications précédentes, **caractérisé en ce qu'**au moins 80 pour cent en masse des fibres dans la couche de voile de carde (2) contiennent du polyester.

7. Milieu filtrant selon l'une quelconque des revendications précédentes, **caractérisé en ce que** la couche de papier filtrant (3) et la couche de voile de carde (2) sont reliées entre elles par laminage des couches, de préférence sous l'effet de la pression et de la température, notamment par calandrage thermique / sous pression.

8. Milieu filtrant selon l'une quelconque des revendications précédentes, **caractérisé en ce que** la couche de papier filtrant (3) et la couche de voile de carde (2) sont reliées entre elles, notamment par une couche centrale adhésive.

9. Elément filtrant ayant un milieu filtrant plié (1) selon l'une quelconque des revendications précédentes, **caractérisé en ce que** la distance entre les plis du milieu filtrant plié (1) est supérieure à 3,5 mm, de préférence 4 à 8 mm, et **en ce que** la hauteur des plis du milieu filtrant (1) est comprise entre 10 et 60 mm.

10. Elément filtrant selon la revendication 9, **caractérisé en ce que** les plis du milieu filtrant présentent des arêtes frontales, la liaison des couches du milieu filtrant (1) étant réalisée par un collage le long des arêtes frontales, notamment par des traces notamment continues d'adhésif, notamment de colle thermofusible.

11. Utilisation du milieu filtrant (1) selon l'une quelconque des revendications 1 à 8 et/ou d'un élément filtrant selon la revendication 9 ou 10 pour filtrer l'air aspiré avant son introduction dans un moteur à combustion interne.
